(19) Europäisches Patentamt / European Patent Office / Office européen des brevets

(11) **EP 2 516 819 B1**

(12) **FASCICULE DE BREVET EUROPEEN**

(45) Date de publication et mention
de la délivrance du brevet:
**20.04.2016 Bulletin 2016/16**

(21) Numéro de dépôt: **10787153.5**

(22) Date de dépôt: **14.10.2010**

(51) Int Cl.:
*F01P 7/16* (2006.01)          *H02K 9/19* (2006.01)
*B60K 11/02* (2006.01)

(86) Numéro de dépôt international:
**PCT/FR2010/052177**

(87) Numéro de publication internationale:
**WO 2011/077020 (30.06.2011 Gazette 2011/26)**

(54) **DISPOSITIF DE REFROIDISSEMENT POUR VÉHICULE AUTOMOBILE**

KÜHLVORRICHTUNG FÜR EIN KRAFTFAHRZEUG

MOTOR VEHICLE COOLING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2009 FR 0959398**

(43) Date de publication de la demande:
**31.10.2012 Bulletin 2012/44**

(73) Titulaire: **Renault S.A.S.**
**92100 Boulogne-Billancourt (FR)**

(72) Inventeurs:
• **CREGUT, Samuel**
**F-78470 Saint-remy-les-chevreuse (FR)**
• **MARSILIA, Marco**
**F-92100 Boulogne Billancourt (FR)**

(56) Documents cités:
**EP-A1- 1 464 801          DE-A1-102004 008 170
US-A- 5 529 114            US-A- 5 678 760
US-A1- 2007 175 415        US-A1- 2009 139 686
US-B1- 6 607 142           US-B1- 6 705 254**

**Description**

L'invention a pour objet un dispositif de refroidissement pour véhicule automobile, comprenant un circuit de refroidissement apte à refroidir un ensemble moteur à l'aide d'un liquide de refroidissement mis en circulation par au moins une pompe à débit variable. L'invention s'applique avantageusement aux véhicules automobiles électriques.

Dans un moteur à combustion interne, les combustions répétées surchauffent les pièces en contact, comme par exemple les pistons, les cylindres, et les soupapes, et se diffusent sur l'ensemble des pièces mécaniques du moteur. Il faut donc les refroidir sous peine de destruction. Pour un bon fonctionnement, les moteurs à explosion ont ainsi besoin d'une température régulière et adaptée.

Dans le cas d'un véhicule à propulsion électrique, il est également nécessaire de refroidir les différents éléments de la chaîne de traction.

Il est connu d'utiliser un système de refroidissement comprenant une ou plusieurs pompes permettant de faire circuler un liquide de refroidissement à travers le moteur, ainsi qu'un radiateur, qui est un échangeur de température permettant de refroidir le liquide (voir par exemple les documents US6607142 B1 et US6705254 B1).

Dans ce cas, le débit de liquide de refroidissement est fonction du régime moteur et est en particulier nul lorsque le moteur est arrêté.

Il apparaît souhaitable de disposer d'un dispositif de refroidissement permettant d'optimiser le fonctionnement des pompes et notamment de limiter leur usure et leur consommation en énergie.

Dans le cas d'un véhicule électrique, il est connu de refroidir l'ensemble moteur lors du roulage du véhicule, ainsi que le chargeur lorsque le véhicule est à l'arrêt. La stratégie de refroidissement est gérée par un dispositif de commande approprié comportant un calculateur qui est en liaison avec des capteurs du circuit de refroidissement, en particulier des capteurs de température du liquide de refroidissement. Le calculateur héberge la stratégie d'élaboration de la commande de débit de liquide de refroidissement afin de piloter les pompes.

Une solution connue est d'asservir le débit de chaque pompe dans un système de régulation en boucle fermée comprenant un correcteur de type proportionnel-intégral (correcteur PI).

Il a été constaté que le correcteur PI ne réagit, c'est-à-dire ne modifie le débit, que lorsque la température de sortie de l'eau dépasse la température de consigne. Or, le système de refroidissement est un système avec une inertie globale qui peut être importante : les calories du système électrotechnique sont générées dans les masses de métal du système électronique de pilotage et peuvent prendre du temps avant d'être évacuées vers l'eau. Un correcteur PI réagit trop tardivement s'il attend les variations de température de l'eau de refroidissement.

Le dispositif selon l'invention tend à apporter une solution visant à s'affranchir de cet inconvénient.

L'invention a ainsi pour objet un dispositif de refroidissement pour véhicule automobile électrique selon la revendication 1.

Le système de commande peut être apte à régler à chaque instant le débit de chaque pompe de manière à ce que la température du liquide de refroidissement ne dépasse pas la température de consigne fixe.

Le système de commande est apte à établir une consigne de débit en fonction d'une température de consigne variable.

La température de consigne variable est par exemple fonction de la température de consigne fixe, de la température du liquide de refroidissement et d'une température du liquide de refroidissement estimée en fonction de la consigne de débit.

La température de consigne variable peut être égale à la différence entre la température du liquide de refroidissement et la température estimée, ôtée de la température de consigne fixe.

Le véhicule automobile peut être un véhicule électrique et l'ensemble moteur peut comprendre un système électronique de pilotage.

Le véhicule électrique comprend un ensemble chargeur de batterie et le circuit de refroidissement est avantageusement apte à refroidir l'ensemble chargeur et l'ensemble moteur.

Le système de commande est apte à établir la consigne de débit en fonction de la température de consigne variable, de la température extérieure au véhicule, de la vitesse du véhicule, des pertes thermiques du système électronique de pilotage et des pertes thermiques du chargeur de batterie.

Le système de commande est de préférence apte à établir la température du liquide de refroidissement estimée en fonction de la consigne de débit, de la température extérieure au véhicule, de la vitesse du véhicule, des pertes thermiques du système électronique de pilotage et des pertes thermiques du chargeur de batterie.

Le dispositif peut comprendre une première pompe apte à alimenter sélectivement en liquide de refroidissement l'ensemble moteur et une deuxième pompe apte à alimenter sélectivement en liquide de refroidissement l'ensemble chargeur.

Le dispositif peut comprendre une première vanne apte à empêcher un passage de liquide de refroidissement dans l'ensemble chargeur et une deuxième vanne apte à empêcher un passage de liquide de refroidissement dans l'ensemble moteur.

Le dispositif peut comprendre une restriction hydraulique permettant de maintenir un débit minimum de liquide de refroidissement dans l'ensemble moteur.

D'autres caractéristiques et avantages de la présente invention apparaîtront plus clairement à la lecture de la description suivante donnée à titre d'exemple illustratif et non limitatif et faite en référence aux dessins annexés sur lesquels :

- la figure 1 illustre sous forme de schéma-blocs un dispositif de refroidissement selon l'invention, intégré à un véhicule électrique,
- les figures 2 à 16 sont des diagrammes utiles à la compréhension de l'invention.

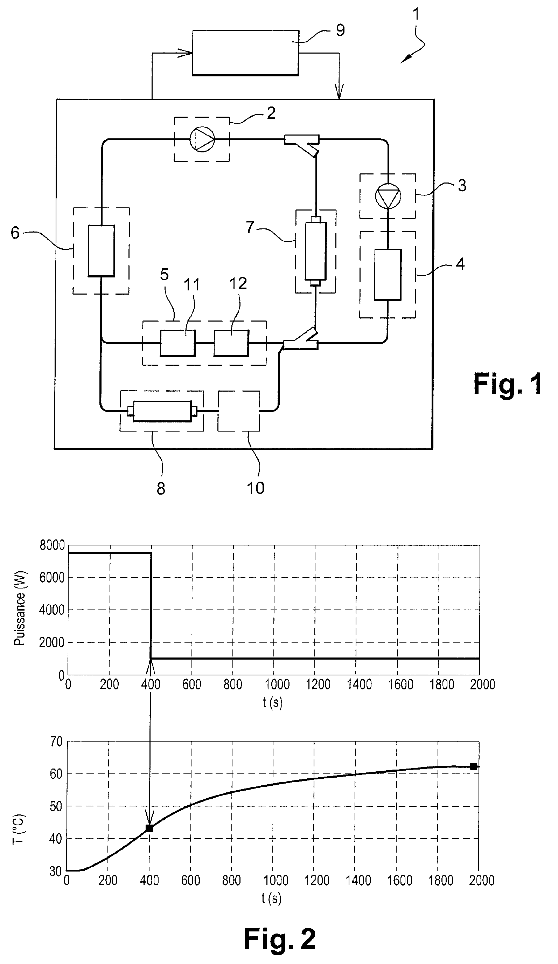

Le dispositif de refroidissement 1, tel qu'illustré à la figure 1, comprend une première pompe électrique 2, une deuxième pompe électrique 3, un chargeur 4 de batterie, un ensemble moteur 5, un radiateur 6, ainsi qu'une première électrovanne 7 et une deuxième électrovanne 8. La première pompe électrique 2, la deuxième pompe électrique 3, la première électrovanne 7 et la deuxième électrovanne 8 sont reliées à un dispositif de commande 9.

La première pompe électrique 2 est destinée à être utilisée lors du roulage du véhicule, tandis que la deuxième pompe électrique 3 est destinée à être utilisée lors de la recharge de la batterie. Le débit de la première pompe 2 et le débit de la deuxième pompe 3 peuvent être réglés à l'aide d'un signal de commande.

Le chargeur 4 permet, lorsque le véhicule est à l'arrêt, de recharger la batterie électrique de traction, non représentée, à partir du réseau électrique domestique.

La première électrovanne 7 permet de court-circuiter la deuxième pompe 3 et le chargeur 4, lors du roulage du véhicule, tandis que la deuxième électrovanne 8 permet de court-circuiter l'ensemble moteur 5 lors du chargement de la batterie, lorsqu'on estime que le refroidissement de l'ensemble moteur 5 n'est pas nécessaire. La deuxième électrovanne 8 peut être reliée à une restriction hydraulique 10 qui permet de réaliser une perte de charge, et de conserver ainsi un débit de liquide de refroidissement dans l'ensemble moteur 5, même lorsque la deuxième électrovanne 8 est passante.

L'ensemble moteur 5 comprend un moteur 11 et un système électronique de pilotage 12 destiné notamment à transformer la tension continue de la batterie en tension alternative.

Le radiateur 6 permet de refroidir le liquide de refroidissement, de manière similaire au dispositif de refroidissement d'un moteur à combustion interne. Il est équipé d'un moto-ventilateur, non représenté.

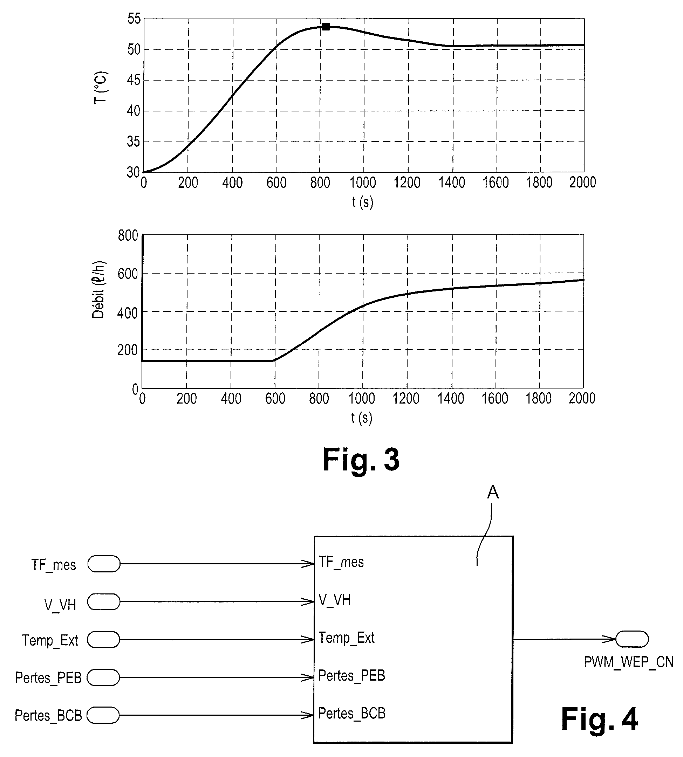

Les figures 2 et 3 illustrent le problème posé à travers un essai de refroidissement. Les conditions de cet essai sont les suivantes.

On réalise un échelon de puissance de pertes du système électrotechnique à dissiper de 7,5 kW pendant 400 s puis 1,5 kW de manière stabilisée. De manière arbitraire, on fixe la vitesse véhicule à 30 km/h, une température extérieure de 30°C, et un débit d'eau constant de 150 l/h.

Le premier essai, illustré à la figure 2, est réalisé en « boucle ouverte », sans correcteur, le débit d'eau étant constant.

La partie haute de la figure montre les pertes du système électronique de pilotage à refroidir, et la partie basse montre la réponse temporelle de la température de l'eau. On constate que qu'à t=400 s, la température de l'eau n'est que de 42,8 °C, et qu'elle va atteindre plus de 60 °C, mais seulement au bout de 33 minutes.

Le deuxième essai, tel qu'illustré à la figure 3, est réalisé dans les mêmes conditions, mais cette fois, le correcteur PI est activé : c'est lui qui va venir modifier le débit. On observe que le correcteur PI ne réagit que lorsque la température de l'eau dépasse la consigne de 50°C : l'action est trop tardive.

Pour y remédier, les entrées et la sortie d'un bloc A de stratégie de commande selon l'invention sont représentées sur la figure 4.

Les entrées du bloc A sont les suivantes :

- TF_mes : il s'agit de la température du liquide de refroidissement, qui peut être obtenue par un seul capteur ou obtenue par la fusion de plusieurs sources (par exemple le moteur électrique ou le système électronique de pilotage peuvent être équipés eux-mêmes de capteurs de température d'eau),
- V_VH : il s'agit de la vitesse du véhicule, calculée habituellement par le calculateur ABS et disponible sur le réseau CAN du véhicule,
- Temp_Ext : il s'agit de la température extérieure obtenue sur le réseau CAN du véhicule,
- Pertes_PEB : il s'agit d'un signal généré par le système électronique de pilotage qui représente une estimation des pertes générées au niveau du système électronique de pilotage et de la machine électrique ; le système électronique de pilotage connaît en effet à tout moment les courants qui circulent dans les phases du moteur, il dispose également d'un (ou souvent plusieurs) capteur(s) de température, il est donc capable d'estimer avec une assez bonne précision les pertes du l'ensemble {système électronique de pilotage, Moteur},
- Pertes_BCB : il s'agit d'un signal généré par le chargeur de batterie qui représente une estimation des pertes générées au niveau du chargeur de batterie ; le chargeur de batterie connaît en effet à tout moment le courant de charge, il dispose également d'un (ou souvent plusieurs) capteur(s) de température, il est donc capable d'estimer avec une assez bonne précision les pertes du chargeur de batterie.

La sortie du bloc A est :

- PWM_WEP_CN : il s'agit de la commande de débit à faire circuler dans le système électrotechnique comprenant le système électronique de pilotage, le chargeur de batterie et le moteur électrique de traction; il s'agit d'un signal entre 0 et 100 exprimant un pourcentage du débit maximal pouvant être réalisé par la pompe.

Suivant le mode de fonctionnement, ce sera soit la première pompe, soit la deuxième pompe qui sera commandée avec ce signal.
L'objectif est de faire évoluer automatiquement la commande de débit entre une valeur minimum et une valeur maximum, en fonction de la température du circuit de refroidissement.
Le principe est le suivant : on choisit une température de consigne que l'on souhaite ne pas dépasser, puis, à l'aide d'un modèle interne explicite et d'une régulation en boucle fermée, on élabore un débit permettant d'obtenir cette température de consigne. Le signal rebouclé est l'écart entre la mesure de température du liquide de refroidissement et la température issue de ce modèle interne explicite.

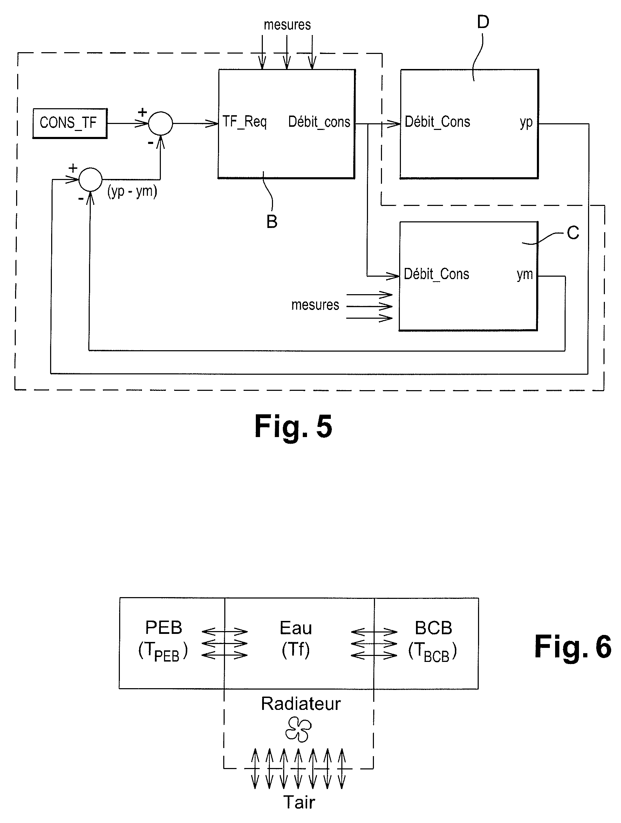

La figure 5 présente le principe de fonctionnement de cette approche.
Le dispositif de contrôle est composé de 2 blocs :

- un bloc B, appelé bloc correcteur, reçoit en entrée une température d'eau TF_Req à atteindre ; à partir de différentes mesures (comme la température extérieure, les puissances à dissiper, la vitesse véhicule), le bloc B est chargé de déterminer quel débit est nécessaire pour obtenir en régime stabilisé cette température d'eau visée TF_Req,
- le bloc C, appelé bloc modèle, reçoit en entrée le débit de consigne calculé par le bloc B et élabore en temps réel une température d'eau ym à partir d'un modèle dynamique du système.

Le débit de consigne est également envoyé à un bloc D correspondant au système réel, et on peut mesurer une température d'eau yp.
Le principe est que la température d'eau visée TF_Req n'est pas constamment égale à la consigne CONS_TF, mais elle est corrigée dès lors que la température réelle s'écarte de la température estimée par le modèle interne.
La suite de la description est consacrée au détail de l'obtention des blocs B et C.
Dans un premier temps, une modélisation fine du système de refroidissement est réalisée à l'aide de modèle du type « éléments finis ». Dans un deuxième temps, un modèle simplifié, basé sur des équations physiques, est réalisé.
La figure 6 illustre le principe retenu. Les hypothèses simplificatrices retenues sont les suivantes :

- suppression des termes de transport : on assimile toute l'eau du circuit de refroidissement à une masse d'eau immobile,
- les organes (système électronique de pilotage PEB, moteur électrique de traction et chargeur de batterie BEB) sont assimilés à des masses de métal ; la chaleur (pertes du système électrotechnique) est générée dans ces masses de métal, puis s'écoule vers la masse d'eau,
- le flux de chaleur s'écoule ensuite à travers le radiateur ; on connaît via les constructeurs de radiateur les caractéristiques d'échange du radiateur.

Les équations dynamiques sont les suivantes :

$$M_{PEB}C_{PEB}\frac{dT_{PEB}}{dt} = P_{PEB} - hiS_{PEB}(T_{PEB} - T_f) \qquad (eq1)$$

$$M_{BCB}C_{BCB}\frac{dT_{BCB}}{dt} = P_{BCB} - hiS_{BCB}(T_{BCB} - T_f) \qquad (eq2)$$

$$M_f C_f \frac{dT_f}{dt} = hiS_{PEB}(T_{PEB} - T_f) + hiS_{BCB}(T_{BCB} - T_f) - \varphi_{radiateur} \quad (eq3)$$

avec :

$M_{PEB}$ = masse de métal équivalente à l'ensemble {système électronique de pilotage + moteur},
$C_{PEB}$ = chaleur massique de l'ensemble {système électronique de pilotage + moteur},
$T_{PEB}$ = Température moyenne de l'ensemble {système électronique de pilotage + moteur},
$hiS_{PEB}$ = coefficient d'échange entre l'eau et l'ensemble {système électronique de pilotage + moteur},
$M_{BCB}$ = masse de métal équivalente au chargeur de batterie,
$C_{BCB}$ = chaleur massique du chargeur de batterie,
$T_{BCB}$ = température moyenne du chargeur de batterie,
$hiS_{BCB}$ = coefficient d'échange entre l'eau et le chargeur de batterie,
$M_f$ = masse de fluide,
$C_f$ = chaleur massique du fluide,
$T_f$ = température de l'eau,
$\varphi$ radiateur = flux de chaleur évacué par le radiateur, donné par une cartographie.

La puissance évacuée par le radiateur dépend de 3 grandeurs :

$$\varphi_{radiateur} = f(Debit, Tair, Tf, V\_AIR)$$

- le débit traversant le radiateur (Debit),
- la température du fluide (Tf), et
- la vitesse d'air traversant le radiateur (V_AIR).

Les constructeurs de radiateur fournissent la puissance évacuée par le radiateur, sous la forme d'une cartographie à 2 dimensions :

Les deux entrées de la cartographie sont :

- le débit en l/h,
- la vitesse d'air en m/s.

La puissance évacuée par le radiateur est donnée pour un écart de température eau/air fixée ΔTref (par exemple ΔTref =10 degrés).

Pour un écart de température eau/air quelconque, on a :

$$Puissance\_radiateur = \frac{(Teau - Tair)}{10}.Puissance\_radiateur\_DTref$$

On a donc un transfert non linéaire en fonction du débit et de la vitesse d'air.

La vitesse d'air est la somme de deux sources :

- la vitesse d'air due à la vitesse véhicule ; il s'agit d'une fraction de la vitesse véhicule, et
- une vitesse d'air supplémentaire apportée par le groupe moto-ventilateur du radiateur ; ce flux d'air dépend lui de la vitesse véhicule.

Pour obtenir le bloc correcteur B, on souhaite obtenir le gain statique du transfert Débit vers Température d'eau du radiateur, autrement dit pour une puissance donnée à évacuer, on doit déterminer quel débit est nécessaire.

Ce problème peut être résolu par linéarisation des cartographies de la puissance du radiateur en fonction du débit. On constate qu'il est possible d'approximer la cartographie par une équation de la forme :

$$\Pr ad\_lin = \lambda 1.(\frac{Vair}{Vair\_ref}).Debit.(\frac{\Delta T}{\Delta Tref}) \text{ (eq 4)}$$

Prad_lin désigne la puissance évacuée approximée par une loi proportionnelle au débit, à la Vitesse de l'air et à ΔTref.

Vair_ref est choisie arbitrairement à 90 km/h (vitesse d'air équivalente à cette vitesse du véhicule).

On conserve ΔTref =10 °C.

λ1 est calculé par exemple pour le point débit = 800 l/h, on a alors une puissance de 26210 W, donc λ1 = 26210/800 W/(l/h).

Le débit s'écrit donc de la façon suivante :

$$Debit = \frac{\Pr adiateur}{\lambda 1.(\frac{Vair}{Vair\_ref}).(\frac{\Delta T}{\Delta Tref})} \ de \ la \ forme : \ Debit = \frac{\Pr adiateur}{\lambda R} \ (eq \ 5)$$

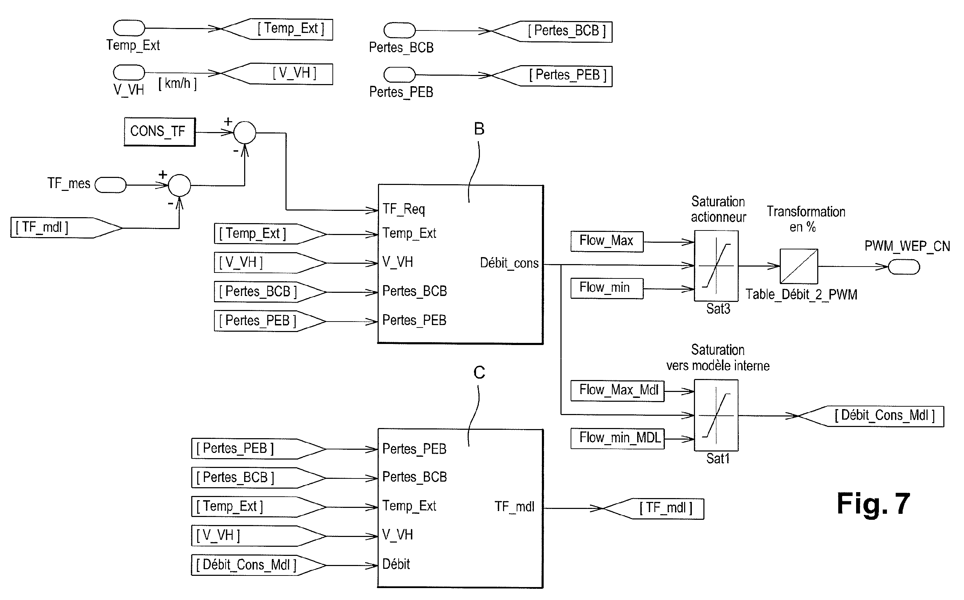

La réalisation du module A de contrôle présenté en figure 2 est représentée en détail sur la figure 7. On retrouve les entrées décrites plus haut.

La commande Debit_cons élaborée par le bloc correcteur B est saturée entre [Flow_Max] et [Flow_Min] qui sont les plages de débit que peut réaliser la pompe. La commande PWM est calculée à l'aide d'une simple table et fournit la sortie du contrôle.

Cette commande est également saturée entre [Flow_Max] et [Flow_Min] avant d'être réinjectée dans le modèle dynamique ; ces deux paramètres constituent 2 paramètres de réglage de l'invention. Le troisième paramètre est « CONS_TF » qui est la température de consigne que l'on souhaite ne pas dépasser.

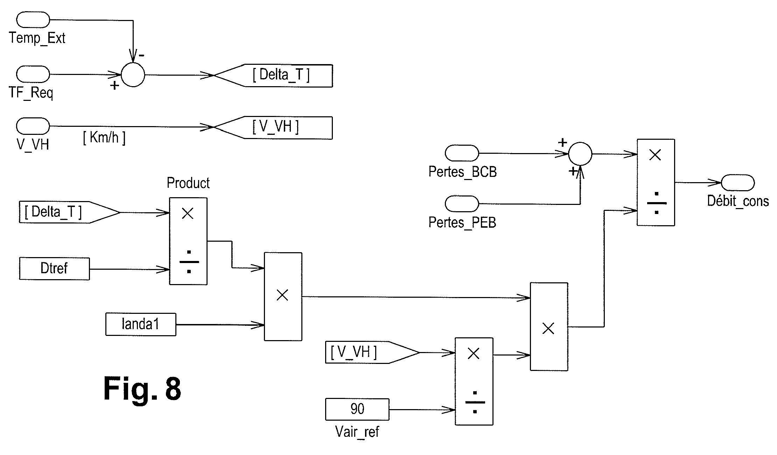

La figure 8 illustre une réalisation possible du bloc B. Il s'agit de la réalisation de l'équation (eq 5).

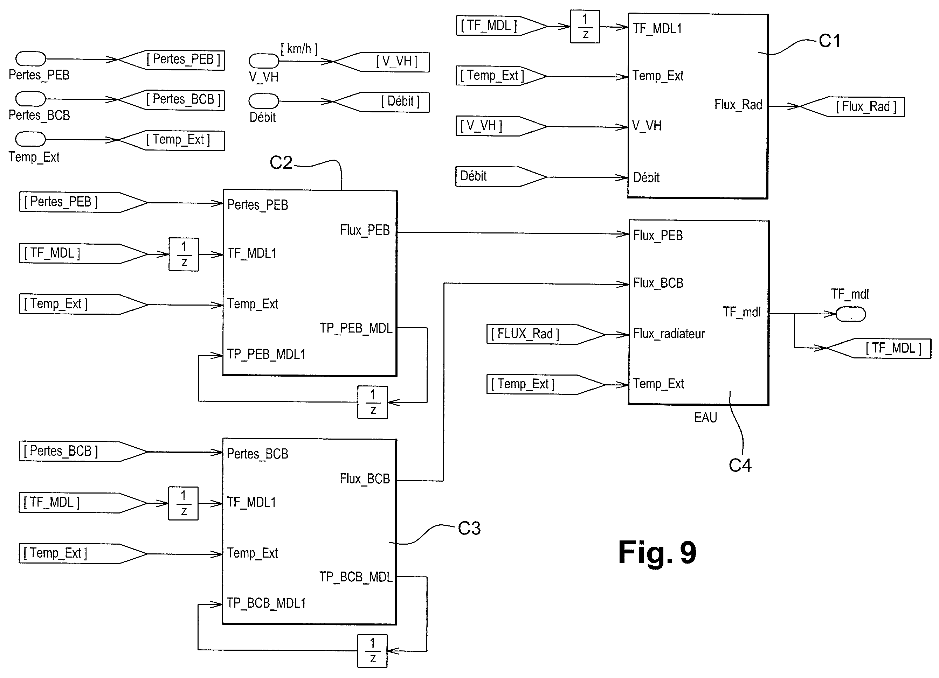

La figure 9 illustre une réalisation possible du bloc C. Le bloc C comporte des intégrations numériques. Il est réalisé à chaque période d'échantillonnage, qui est typiquement de l'ordre de 1 seconde.

Comme on peut le voir, le modèle est décomposé en 4 blocs C1 à C4, dont les opérations sont exécutées successivement dans l'ordre suivant :

- le bloc C1 ('Flux_Radiateur_lineaire'),
- le bloc C2 ('PEB_ME'),
- le bloc C3 ('BCB'),
- le bloc C4 ('EAU').

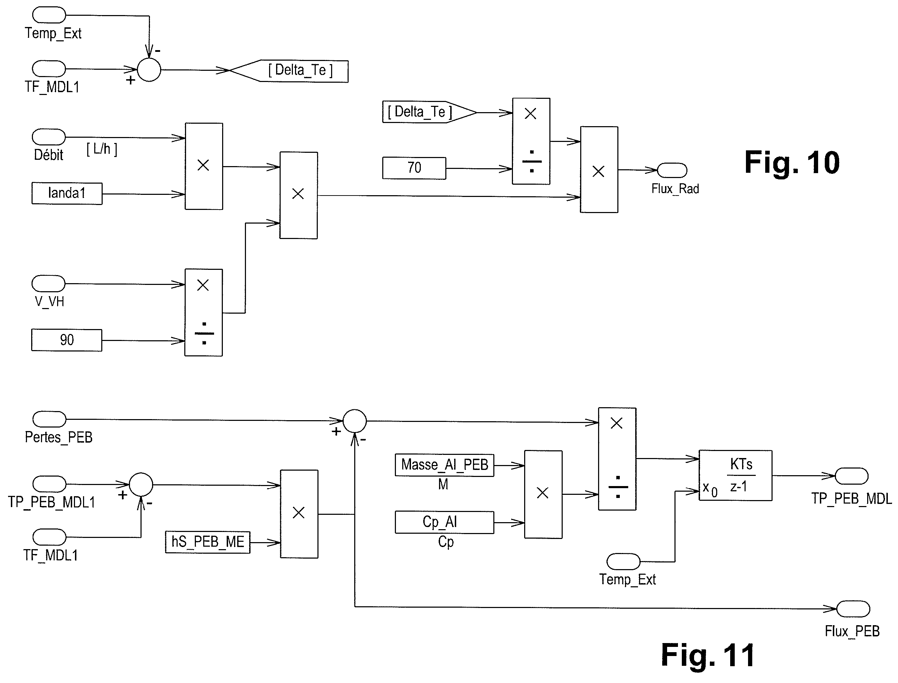

Le bloc C1 ('Flux_Radiateur_lineaire') est chargé de calculer la puissance évacuée par le radiateur vers l'air extérieur. Une réalisation possible de ce bloc est donnée à la figure 10.

Les entrées du bloc C1 sont les suivantes :

- TF_MDL1 : température d'eau calculée par le modèle à l'instant d'échantillonnage précédent,
- Temp_Ext : température d'air extérieure au véhicule, mesurée par le calculateur habitacle,
- V_VH : vitesse du véhicule,
- Débit : mesure de débit.

La sortie du bloc C1 est Flux_Rad, le flux du radiateur. Le bloc C1 correspond bien à la réalisation de l'équation (eq 4).

Le bloc C2 est chargé de calculer la puissance échangée entre l'ensemble {système électronique de pilotage + moteur} vers l'eau, ainsi que la température de l'ensemble {système électronique de pilotage + moteur}. Une réalisation possible de ce bloc est donnée à la figure 11.

Les entrées du bloc C2 sont les suivantes :

- Pertes_PEB : pertes dissipées par l'ensemble {système électronique de pilotage + moteur},
- TF_MDL1 : température d'eau calculée par le modèle à l'instant d'échantillonnage précédent,

- Temp_Ext : température d'air extérieure au véhicule, mesurée par le calculateur habitacle,
- TP_PEB_MDL1 : température de l'ensemble {système électronique de pilotage + moteur} calculée par le bloc « PEB_ME » à l'instant d'échantillonnage précédent.

Les sorties du bloc C2 sont les suivantes :

- Flux_PEB : flux échangé entre l'ensemble {système électronique de pilotage + moteur} et l'eau,

- TP_PEB_MDL : température de l'ensemble {système électronique de pilotage + moteur}.

Le bloc C2 correspond bien à la réalisation de l'équation (eq 1).

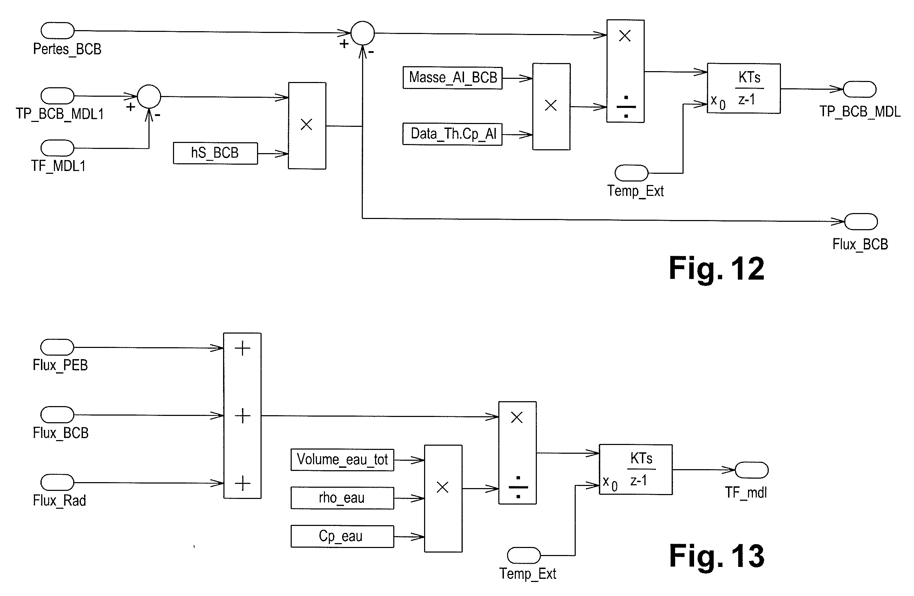

Le bloc C3 est chargé de calculer la puissance échangée entre le chargeur de batterie et l'eau, ainsi que la température du chargeur de batterie. Une réalisation possible de ce bloc est donnée à la figure 12.

Les entrées du bloc C3 sont les suivantes :

- Pertes_BCB : pertes dissipées par le chargeur de batterie,
- TF_MDL1 : température d'eau calculée par le modèle à l'instant d'échantillonnage précédent,
- Temp_Ext : température d'air extérieure au véhicule, mesurée par le calculateur habitacle,
- TP_BCB_MDL1 : température du chargeur de batterie calculée par le bloc « BCB » à l'instant d'échantillonnage précédent.

Les sorties du bloc C3 sont les suivantes :

- Flux_BCB : flux échangé entre le chargeur de batterie et l'eau,
- TP_BCB_MDL : température du chargeur de batterie.

Le bloc C3 correspond bien à la réalisation de l'équation (eq 2).

Le bloc C4 est chargé de calculer la température de l'eau. Une réalisation possible de ce bloc est donnée à la figure 13.

Les entrées du bloc C4 sont les suivantes :

- Flux_PEB : flux échangé entre l'ensemble {système électronique de pilotage + moteur} et l'eau,
- Flux_BCB : flux échangé entre le chargeur de batterie et l'eau,
- Flux_Rad : flux échangé entre le radiateur et l'air extérieur,
- Temp_Ext : température d'air extérieure au véhicule, mesurée par le calculateur habitacle.

La sortie du bloc C4 est TF_MDL, la température d'eau issue du modèle interne.

Le bloc C4 correspond bien à la réalisation de l'équation (eq 3).

Il est à noter que les paramètres dans les blocs C1 à C4 sont des paramètres ayant un sens physique.

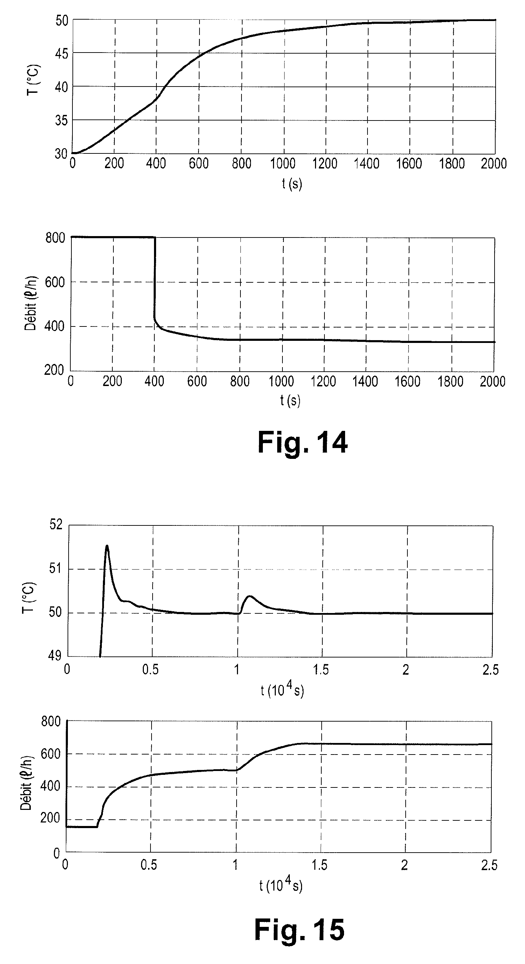

La figure 14 montre l'évolution de la température de l'eau et du débit d'eau en fonction du temps, obtenue à l'aide du dispositif selon l'invention. Les conditions d'essais sont identiques à celles décrites pour les figures 2 et 3.

On observe que l'objectif souhaité est atteint : dès le début de l'essai, le correcteur est en mesure de prévoir que le débit nécessaire pour obtenir une température d'eau à 50°C est un fort débit (la commande est saturée au débit maximum de 800 l/h). Ensuite, lorsque les pertes à dissiper diminuent, le correcteur réajuste rapidement la commande de débit à la valeur nécessaire. La température d'eau reste ainsi inférieure à 50°C pendant tout l'essai.

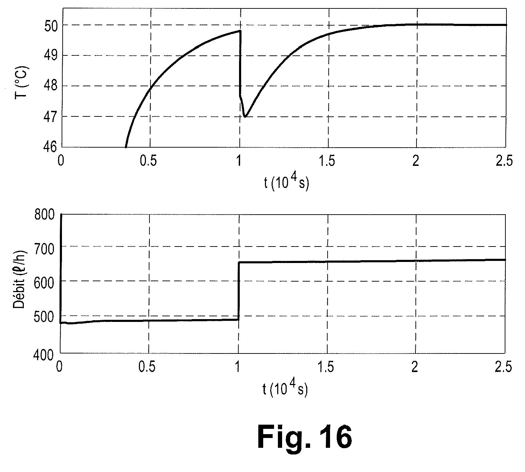

Un deuxième essai montrant le bon fonctionnement de l'invention est illustré sur les figures 15 et 16.

Les conditions de cet essai sont les suivantes. Au départ, on injecte des pertes de 1500 W. On fixe la vitesse du véhicule à 30 km/h, avec une température extérieure de 30°C.

A t ≈ 10000 s, on injecte des pertes de 2000 W.

La figure 15 montre le fonctionnement du correcteur PI. Le correcteur ne vient modifier le débit que lorsque la température d'eau dépasse la température de consigne de 50°C. On réagit donc sur des dépassements de consigne.

Tel qu'illustré à la figure 16, le correcteur selon l'invention calcule immédiatement, en une période d'échantillonnage, le débit statique nécessaire au refroidissement. On observe ici que lors de la variation en échelon de la puissance, le débit d'eau est recalculé instantanément ce qui évite tout dépassement de la consigne, contrairement au correcteur PI.

L'invention confère donc une plus grande sécurité au système. Lorsqu'on fixe une température de consigne à ne pas dépasser, le correcteur assure que le débit sera commandé de manière optimale pour ne pas dépasser cette consigne.

Dans le cas où le besoin de refroidissement sera trop fort pour être assuré par simplement une augmentation de débit, on activera alors le groupe moto-ventilateur pour augmenter ce refroidissement. Avec le correcteur à modèle interne selon l'invention, le groupe moto-ventilateur ne sera activé que lorsque tout ce qui était faisable par la commande de débit a été effectué.

**Revendications**

1. Dispositif de refroidissement (1) pour véhicule automobile électrique,comprenant un circuit de refroidissement apte à refroidir un ensemble moteur (5) comprenant un système électronique de pilotage (12) et un ensemble chargeur (4) de batterie, à l'aide d'un liquide de refroidissement mis en circulation à l'aide d'au moins une pompe (2,3) à débit variable, le débit de chaque pompe (2,3) étant commandé par un système de commande (9), le système de commande (9) étant apte à régler le débit de chaque pompe (2,3) de manière à ce que la température du liquide de refroidissement ne dépasse pas une température de consigne fixe (CONS_TF), **caractérisé en ce que** le système de commande (9) est apte à établir une consigne de débit (Débit_Cons) en fonction d'une température de consigne variable (TF_Req), de la température extérieure au véhicule (Temp_Ext), de la vitesse du véhicule (V_VH), des pertes thermiques du système électronique de pilotage (Pertes_PEB) et des pertes thermiques du chargeur de batterie (Pertes_BCB).

2. Dispositif (1) selon la revendication 1, **caractérisé en ce que** le système de commande (9) est apte à régler à chaque instant le débit de chaque pompe (2,3) de manière à ce que la température du liquide de refroidissement ne dépasse pas la température de consigne fixe.

3. Dispositif (1) selon la revendication 2, **caractérisé en ce que** la température de consigne variable est fonction de la température de consigne fixe, de la température du liquide de refroidissement et d'une température du liquide de refroidissement estimée en fonction de la consigne de débit.

4. Dispositif (1) selon la revendication 3, **caractérisé en ce que** la température de consigne variable est égale à la différence entre la température du liquide de refroidissement et la température estimée, ôtée de la température de consigne fixe.

5. Dispositif (1) selon la revendication 1 en liaison avec la revendication 3, **caractérisé en ce que** le système de commande (9) est apte à établir la température du liquide de refroidissement estimée en fonction de la consigne de débit, de la température extérieure au véhicule, de la vitesse du véhicule, des pertes thermiques du système électronique de pilotage et des pertes thermiques du chargeur de batterie.

6. Dispositif (1) selon l'une des revendications 1 à 5, **caractérisé en ce qu'**il comprend une première pompe (2) apte à alimenter sélectivement en liquide de refroidissement l'ensemble moteur (5) et une deuxième pompe (3) apte à alimenter sélectivement en liquide de refroidissement l'ensemble chargeur (4).

7. Dispositif (1) selon l'une des revendications 1 à 6, **caractérisé en ce qu'**il comprend une première vanne (7) apte à empêcher un passage de liquide de refroidissement dans l'ensemble chargeur (4) et une deuxième vanne (8) apte à empêcher un passage de liquide de refroidissement dans l'ensemble moteur (5).

8. Dispositif (1) selon la revendication 7, **caractérisé en ce qu'**il comprend une restriction hydraulique (10) permettant de maintenir un débit minimum de liquide de refroidissement dans l'ensemble moteur (5).

**Patentansprüche**

1. Kühlvorrichtung (1) für ein Kraftfahrzeug des elektrischen Typs, einen Kühlkreislauf umfassend, der dazu geeignet ist, eine Motorbaugruppe (5), die ein elektronisches System zum Steuern (12) und eine Aufladeeinheit (4) einer Batterie umfasst, mit Hilfe einer Kühlflüssigkeit zu kühlen, die mittels mindestens einer Pumpe (2, 3) mit variablem Durchfluss in Umlauf versetzt wird, wobei der Durchfluss jeder Pumpe (2, 3) durch ein Steuersystem (9) gesteuert wird, wobei das Steuersystem (9) dazu geeignet ist, den Durchfluss jeder Pumpe (2, 3) dergestalt zu regeln, dass die Temperatur der Kühlflüssigkeit eine feste Solltemperatur (CONS_TF) nicht übersteigt, **dadurch gekennzeichnet, dass** das Steuersystem (9) dazu geeignet ist, einen Durchflusssollwert (Debit_Cons) in Abhängigkeit von einer variablen Solltemperatur (TF_Req), der Außentemperatur des Kraftfahrzeugs (Temp_Ext), der Geschwindigkeit des Kraftfahrzeugs (V_VH), den Wärmeverlusten des elektronischen Steuersystems (Pertes_PEB) und den Wärmeverlusten des Ladegeräts der Batterie (Pertes_BCB) zu erzeugen.

2. Vorrichtung (1) nach Anspruch 1, **dadurch gekennzeichnet, dass** das Steuersystem (9) dazu geeignet ist, zu jeder Zeit den Durchfluss von jeder Pumpe (2, 3) dergestalt zu regeln, dass die Temperatur der Kühlflüssigkeit die feste Solltemperatur nicht übersteigt.

**3.** Vorrichtung (1) nach Anspruch 2, **dadurch gekennzeichnet, dass** die variable Solltemperatur eine Funktion der festen Solltemperatur, der Temperatur der Kühlflüssigkeit und einer Temperatur der Kühlflüssigkeit ist, die in Abhängigkeit von dem Durchflusssollwert geschätzt wird.

**4.** Vorrichtung (1) nach Anspruch 3, **dadurch gekennzeichnet, dass** die variable Solltemperatur gleich der Differenz zwischen der Temperatur der Kühlflüssigkeit und der geschätzten Temperatur abzüglich der festen Solltemperatur ist.

**5.** Vorrichtung (1) nach Anspruch 1 in Verbindung mit Anspruch 3, **dadurch gekennzeichnet, dass** das Steuersystem (9) dazu geeignet ist, die Temperatur der Kühlflüssigkeit zu erzeugen, die in Abhängigkeit von dem Durchflusssollwert, der Außentemperatur des Kraftfahrzeugs, der Geschwindigkeit des Kraftfahrzeugs, den Wärmeverlusten des elektronischen Systems zum Steuern und den Wärmeverlusten des Ladegeräts der Batterie geschätzt wird.

**6.** Vorrichtung (1) nach einem der Ansprüche 1 bis 5, **dadurch gekennzeichnet, dass** sie eine erste Pumpe (2), die dazu geeignet ist, die Motorbaugruppe (5) selektiv mit Kühlflüssigkeit zu versorgen, und eine zweite Pumpe (3) umfasst, die dazu geeignet ist, die Aufladeeinheit (4) selektiv mit Kühlflüssigkeit zu versorgen.

**7.** Vorrichtung (1) nach einem der Ansprüche 1 bis 6, **dadurch gekennzeichnet, dass** sie eine erste Drossel (7), die dazu geeignet ist, einen Durchgang von Kühlflüssigkeit in die Aufladeeinheit (4) zu verhindern, und eine zweite Drossel (8) umfasst, die dazu geeignet ist, einen Durchgang von Kühlflüssigkeit in die Motorbaugruppe (5) zu verhindern.

**8.** Vorrichtung (1) nach Anspruch 7, **dadurch gekennzeichnet, dass** sie einen hydraulischen Begrenzer (10) umfasst, der es ermöglicht, einen minimalen Durchfluss an Kühlflüssigkeit in der Motorbaugruppe (5) aufrechtzuerhalten.

**Claims**

**1.** Cooling device (1) for an electric motor vehicle, comprising a cooling circuit capable of cooling an engine unit (5) including an electronic piloting system (12) and a battery charger unit (4), using a liquid coolant circulated by at least one variable flow rate pump (2, 3), the flow rate of each pump (2, 3) being commanded by a command system (9), the command system (9) being capable of adjusting the flow rate of each pump (2, 3) so that the temperature of the liquid coolant does not exceed a fixed set point temperature (CONS_TF),
**characterized in that** the command system (9) is able to establish a flow rate set point (Debit_Cons) as a function of a variable set point temperature (TF_Req), the temperature outside the vehicle (Temp_Ext), the speed of the vehicle (V_VH), the thermal losses of the electronic piloting system (Pertes_PEB) and the thermal losses of the battery charger (Pertes_BCB)

**2.** Device (1) according to Claim 1, **characterized in that** the command system (9) is capable of adjusting the flow rate of each pump (2, 3) at all times so that the temperature of the liquid coolant does not exceed the fixed set point temperature.

**3.** Device (1) according to Claim 2, **characterized in that** the variable set point temperature is a function of the fixed set point temperature, the temperature of the liquid coolant and a temperature of the liquid coolant estimated as a function of the flow rate set point.

**4.** Device (1) according to Claim 3, **characterized in that** the variable set point temperature is equal to the difference between the temperature of the liquid coolant and the estimated temperature, subtracted from the fixed set point temperature.

**5.** Device (1) according to Claim 1 in conjunction with Claim 3, **characterized in that** the command system (9) is able to establish the estimated liquid coolant temperature as a function of the flow rate set point, the temperature outside the vehicle, the speed of the vehicle, the thermal losses of the electronic piloting system and the thermal losses of the battery charger.

**6.** Device (1) according to one of Claims 1 to 5, **characterized in that** it includes a first pump (2) able to supply liquid coolant selectively to the engine unit (5) and a second pump (3) able to supply liquid coolant selectively to the charger unit (4).

7. Device (1) according to one of Claims 1 to 6, **characterized in that** it includes a first valve (7) able to stop liquid coolant from entering the charger unit (4) and a second valve (8) able to stop liquid coolant from entering the engine unit (5).

8. Device (1) according to Claim 7, **characterized in that** it includes a hydraulic restriction (10) enabling a minimum flow rate of liquid coolant to be maintained in the engine unit (5).

**Fig. 1**

**Fig. 2**

Fig. 3

Fig. 4

**Fig. 5**

**Fig. 6**

Fig. 7

EP 2 516 819 B1

EP 2 516 819 B1

Fig. 8

15

**Fig. 9**

EP 2 516 819 B1

Fig. 10

Fig. 11

EP 2 516 819 B1

Fig. 12

Fig. 13

Fig. 14

Fig. 15

Fig. 16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6607142 B1
- US 6705254 B1